# EUROPEAN PATENT APPLICATION

(11) **EP 2 738 592 A1**
(43) Date of publication of application: **04.06.2014**
(21) Application number: 13195052.9
(22) Date of filing: 29.11.2013
(51) Int. Cl.: G02C 5/22

(54) **Hinge for temples of eyeglasses**

(30) Priority: 30.11.2012 IT PD20120358
(71) Applicant: Silcon Plastic S.R.L., 32012 Forno di Zoldo (BL) (IT)
(72) Inventor: Costantin, Arcangelo, 32012 Forno Di Zoldo BL (IT); Battistin, Pietro, 32012 Forno Di Zoldo BL (IT)
(74) Representative: Modiano, Micaela Nadia

(57) **Abstract**

A hinge (10) for temples of eyeglasses, of the type comprising a pivot (11) for rotation between a temple (12) and a front (13) or end piece, to which the temple (12) is pivoted; the pivot (11) extends from a male hinge element (14) that protrudes in a cantilever manner from either of the temple (12) and the front (13) or end piece, and is designed for insertion with snap engagement in a corresponding female hinge seat (15), which is defined on a coupling portion (16) that protrudes from the remaining part between the temple (12) and the front (13) or end piece, with a radial opening (17) for the entry of the pivot (11).

The coupling portion (16) is fork-shaped, with at least one of the two arms (18, 19) elastically flexible; the female hinge seat (15) is defined between the two facing ends (20, 21) of the fork arms (18, 19).

## Description

The present invention relates to a hinge for temples of eyeglasses.

Nowadays in the eyeglasses industry, the use is known and widespread of hinges for temples of eyeglasses, of the type comprising a pivot for relative rotation between a temple and a front or end piece, to which the temple is pivoted; the pivot extends from a male hinge element that protrudes in a cantilever manner from either of the temple and the front or end piece, and is designed for insertion with snap engagement in a corresponding female hinge seat; the latter item is defined on a coupling portion that protrudes from the remaining part between the temple and the front or end piece, with a radial opening for the entry of the pivot.

Such hinges are implemented in a simple manner, by way of injection-molding of plastic material to make the elements that compose them, and are very practical in use, since the engagement by snap action of the pivot into the female seat enables both an easy and rapid assembly of the eyeglasses and an equally easy and rapid removal of the temple from the front or end piece.

This lends itself well to being used for those types of eyeglasses with temples that can be interchanged according to the aesthetic tastes of the purchaser and user, in which the temples can be removed and mounted many times.

Such conventional hinges for eyeglass temples, although widespread and appreciated, all have the drawback consisting in that the pivot is positioned in its female hinge seat with a certain amount of play or in any case without interference.

This ensures that the temples, when the eyeglasses are not in use, are free to rotate with no restrictions except for the stroke limit.

Such freedom of rotation gives rise to an inconvenience in terms of manageability, owing to the risk for example that the temples can open when placing the eyeglasses in a case or in a pocket, and to a problem of integrity of the eyeglasses over time, since the temples are free to rotate and collide against the front, and every impact translates to wear and tear of the parts that have collided.

The aim of the present invention is to provide a hinge for temples of eyeglasses which is capable of overcoming the above mentioned drawbacks of conventional hinges for temples of eyeglasses.

Within this aim, an object of the invention is to provide a hinge that allows greater control of the angular position of the temples by the user.

Another object of the invention is to provide a hinge that renders the eyeglasses on which it is provided more easily manageable.

Another object of the invention is to provide a hinge that enables, in the manner of conventional hinges, the easy and rapid substitution of the temples.

Another object of the invention is to provide a hinge for temples of eyeglasses that can be made using conventional systems and technologies.

This aim and these and other objects which will become better evident hereinafter are achieved by a hinge for temples of eyeglasses, of the type comprising a pivot for relative rotation between a temple and a front or end piece, to which said temple is pivoted, said pivot extending from a male hinge element that protrudes in a cantilever manner from either of said temple and said front or end piece, and being designed for insertion with snap engagement in a corresponding female hinge seat, which is defined on a coupling portion that protrudes from the remaining part between said temple and said front or end piece, with a radial opening for the entry of said pivot, said hinge being characterized in that said coupling portion is fork-shaped, with at least one of the two arms elastically flexible, said female hinge seat being defined between the two facing ends of said fork arms.

Further characteristics and advantages of the invention will become better apparent from the description of two preferred, but not exclusive, embodiments of the hinge for temples of eyeglasses according to the invention, which are illustrated by way of non-limiting example in the accompanying drawings wherein:
Figure 1 is a perspective view of a hinge according to the invention, in a first embodiment thereof;
Figure 2 is an exploded perspective view of the hinge in Figure 1;
Figure 3 shows an enlarged detail of Figure 2;
Figure 4 is a perspective view of a hinge according to the invention, in a second embodiment thereof;
Figure 5 is a perspective view of a component of the hinge in Figure 4;
Figure 6 shows an enlarged detail of Figure 4.

With reference to the figures, a hinge for temples of eyeglasses according to the invention is generally designated with the reference numeral 10.

Such hinge 10 is of the type comprising a pivot 11 for relative rotation between a temple 12 and a front 13 or end piece, to which the temple 12 is pivoted.

The pivot 11 extends from a male hinge element 14 that protrudes in a cantilever manner from the front 13, and is designed for insertion with snap engagement in a corresponding female hinge seat 15, which is defined on a coupling portion 16 that protrudes from the temple 12.

The female hinge seat 15 has a radial opening 17 for the entry of the pivot 11.

The peculiarity of the hinge 10 according to the invention consists in that the coupling portion 16 is fork-shaped with at least one of the two arms 18 and 19 elastically flexible.

The female hinge seat 15 is defined between the two facing ends 20 and 21 of the fork arms 18 and 19.

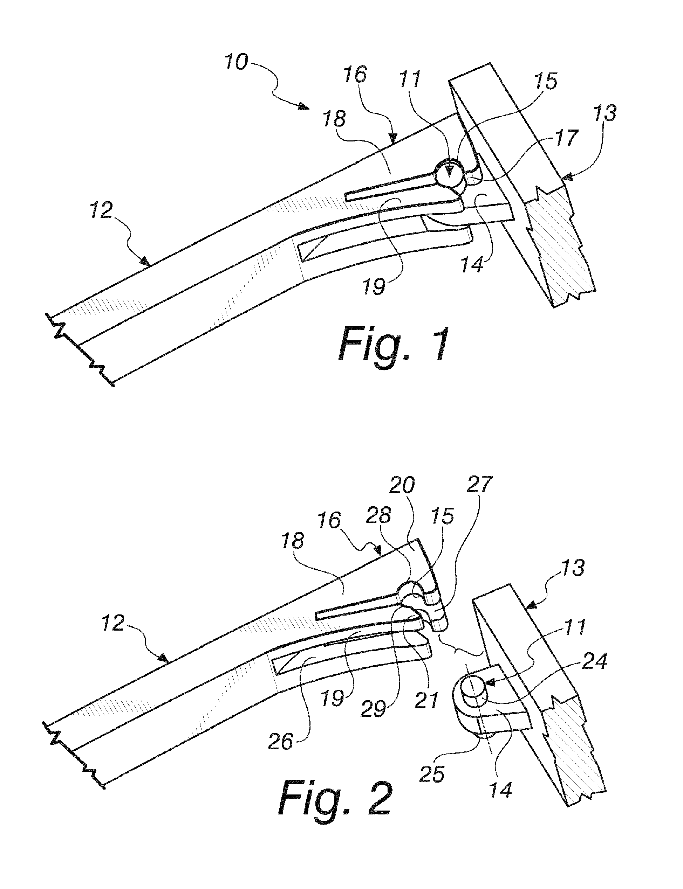

The diameter 22 of the female seat 15 is smaller than the diameter 23 of the pivot 11, so that the entry of the pivot 11 into the female seat 15 causes the divarication of the two fork arms 18 and 19 by elastic deformation of at least one of the two arms, as in Figure 1.

In the embodiments of the invention described herein, which are non-limiting examples of the invention, the pivot 11 is constituted by two cylindrical protrusions 24 and 25 that extend from the male hinge element 14 in opposite directions of the same line determined by the rotation axis of the hinge.

Each fork arm 18 and 19 has a longitudinal opening 26 and 27 for the passage in insertion of the male hinge element 14.

The female hinge seat 15 comprises a first portion 28, which is defined on a first end 20 of a first fork arm 18, for the resting of the pivot 11, and a second portion 29, which is defined on the opposing second end 21 of the second fork arm 19, for pressing on the pivot 11, and is adapted to produce friction control of the rotation of the pivot 11 when the latter is in the female seat 15.

In such first embodiment of the invention the inner surfaces of the first and second parts 28 and 29 of the female hinge seat 15 are substantially smooth.

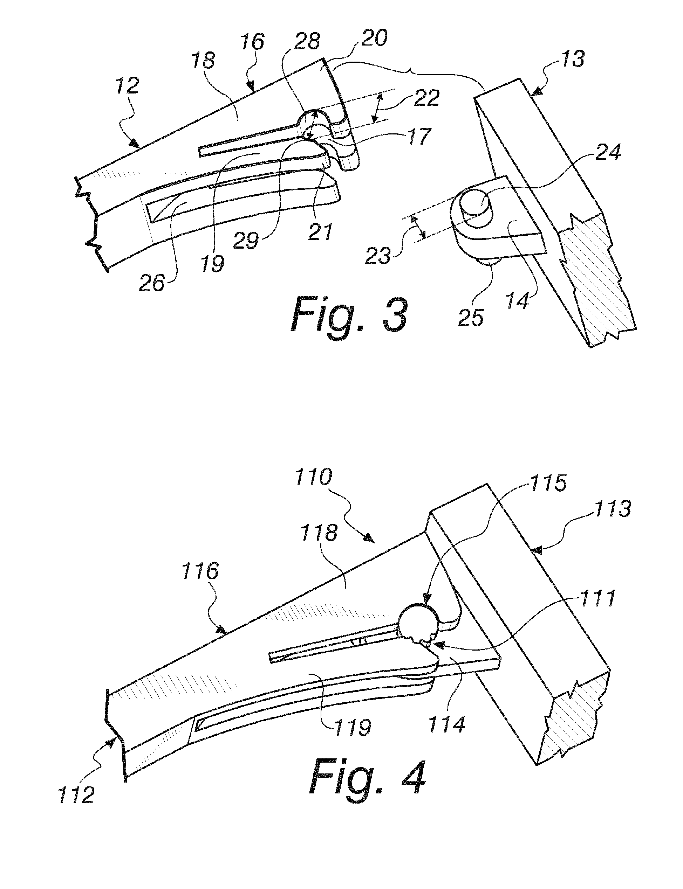

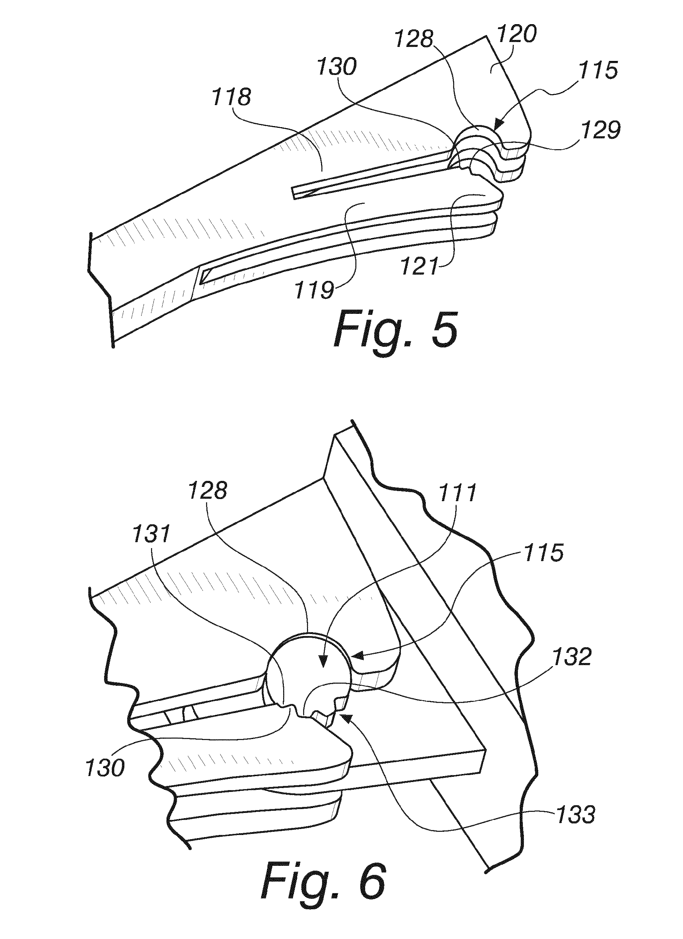

In a second embodiment of the hinge according to the invention, shown in Figures 4 to 6 and designated therein with the reference numeral 110, the female hinge seat 115 comprises a first portion 128, which is defined on a first end 120 of a first fork arm 118, smooth and for the resting of the pivot 111, and a second portion 129, which is defined on the opposite second end 121 of the second fork arm 119, for pressing on the pivot 111, and is provided with an engagement contour 130, for example a tooth, which is adapted for reversible engagement between two teeth, for example 131 and 132 in Figure 6, of a toothed sector 133 that is defined on the pivot 111.

Such toothed sector 133 and the engagement contour 130 produce a plurality of stable relative angular positions between the pivot 111 and the female seat 115.

This embodiment of the invention is also shown with the male element 114 extending from the front 113, while the coupling portion 116 with the female seat 115 is part of the temple 112.

It should be noted that the scope of the invention includes the variations in which the male element is part of the temple and the coupling portion with the female hinge seat is part of the front or end piece.

Such male element 14 and 114 and the coupling portion 16 and 116 are advantageously provided by injection-molding plastic material.

In practice it has been found that the invention fully achieves the intended aim and objects.

In particular, with the invention a hinge has been provided that allows greater control of the angular position of the temples by the user, thanks to the forked coupling portion, in the female hinge seat of which the pivot is either friction controlled or locked in a position selected from among a plurality of positions that can be selected by rotating the temple and making the tooth of the second portion 129 of the seat 115 engage by snapping between two teeth of the toothed sector 133 of the pivot 111.

Furthermore, with the invention a hinge has been provided that renders the eyeglasses on which it is provided more easily manageable, in that the position selected for the temple is kept stable.

Furthermore, with the invention a hinge has been provided that enables, in the manner of conventional hinges, the easy and rapid substitution of the temples.

Last but not least, with the invention a hinge for temples of eyeglasses has been provided which can be made using conventional systems and technologies.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. PD2012A000358 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A hinge (10) for temples of eyeglasses, of the type comprising a pivot (11) for relative rotation between a temple (12) and a front (13) or end piece, to which said temple (12) is pivoted, said pivot (11) extending from a male hinge element (14) that protrudes in a cantilever manner from either of said temple (12) and said front (13) or end piece, and being designed for insertion with snap engagement in a corresponding female hinge seat (15), which is defined on a coupling portion (16) that protrudes from the remaining portion between said temple (12) and said front (13) or end piece, with a radial opening (17) for the entry of said pivot (11), said hinge (10) being **characterized in that** said coupling portion (16) is fork-shaped, with at least one of the two arms (18, 19) elastically flexible, said female hinge seat (15) being defined between the two facing ends (20, 21) of said fork arms (18, 19).

2. The hinge according to claim 1, **characterized in that** the diameter (22) of said female seat (15) is smaller than the diameter (23) of said pivot (11), the entry of said pivot (11) in said female seat (15) causing the divarication of the two fork arms (18, 19) by elastic deformation of at least one of said two arms (18, 19).

3. The hinge according to one or more of the preceding claims, **characterized in that** said pivot (11) is constituted by two cylindrical protrusions (24, 25) that extend from said male hinge element (14) in opposite directions of the same line determined by the rotation axis of said hinge.

4. The hinge according to one or more of the preceding claims, **characterized in that** each fork arm (18, 19) has a longitudinal opening (26, 27) for the passage in insertion of said male hinge element (14).

5. The hinge according to one or more of the preceding claims, **characterized in that** said female hinge seat (15) comprises a first portion (28), which is defined on a first end (20) of a first fork arm (18) for the resting of said pivot (11), and a second portion (29), which is defined on the opposite second end (21) of the second fork arm (19), for pressing on said pivot (11), and is adapted to produce friction control of the rotation of said pivot (11) in said female seat (15).

6. The hinge according to one or more of claims 1 to 4, **characterized in that** said female hinge seat (115) comprises a first portion (128), which is defined on a first end (120) of a first fork arm (118), for the resting of said pivot (111), and a second portion (129), which is defined on the opposite second end (121) of the second fork arm (119), for pressing on said pivot (111), and is provided with an engagement contour (130) that is adapted for reversible engagement between two teeth (131, 132) of a toothed sector (133) that is defined on said pivot (111), said toothed sector (133) and said engagement contour (130) determining a plurality of stable relative angular positions between said pivot (111) and said female seat (115).

7. The hinge according to one or more of the preceding claims, **characterized in that** said male element (14, 114) is part of said front (13, 113) or end piece, said coupling portion (16, 116) with female seat (15, 115) being part of said temple (12, 112).

8. The hinge according to one or more of the preceding claims, **characterized in that** said male element (14, 114) and said coupling portion (16, 116) are provided by injection-molding plastic material.
